# EUROPEAN PATENT SPECIFICATION

(11) **EP 2 543 542 B1**
(45) Date of publication and mention of the grant of the patent: **21.11.2018**
(21) Application number: 11010284.5
(22) Date of filing: 29.12.2011
(51) Int. Cl.: B60Q 1/34, B60Q 1/52

(54) **Automotive turn signal lamp and controlling method for the same**
Automobil-Abbiegesignallampe und Steuerungsverfahren dafür
Feu de clignotant latéral automobile et son procédé de contrôle

(30) Priority: 08.07.2011 KR 20110067885
(43) Date of publication of application: 09.01.2013
(73) Proprietor: SL Corporation, Daegu (KR)
(72) Inventor: Son, Youngho, Gyeongsan, 712-837 (KR); Ji, Byoungki, Gyeongsan, 712-837 (KR)
(74) Representative: Hoefer & Partner Patentanwälte mbB

(56) References cited:
- EP-A1- 2 233 356
- FR-A1- 2 923 777
- JP-A- H11 301 346
- JP-A- 2006 040 707
- US-A1- 2005 117 364
- US-A1- 2007 053 195
- US-A1- 2011 128 141
- US-B1- 6 422 728

## Description

### BACKGROUND

### 1. Field of the Invention

The present invention relates to an automotive turn signal lamp and a method for controlling the same, and more particularly, to an automotive turn signal lamp allowing other drivers or pedestrians to easily detect a change in travel direction of a vehicle or a turning direction at an intersection even when it is difficult to see the turn signal lamp, and a method for controlling the same.

JP H 11 301346 A discloses on both right and left sides of vehicle body front part, yellow direction indication lamps serving also as emergency indication brinking lamps while on both right and left sides of vehicle body rear part, yellow direction indication lamps serving also as emergency indicating brinking lamps are provided. Also, at a lower surface of a front bumper, a pair of right and left auxiliary direction indication lamps are provided, while at a lower surface of a rear bumper, a pair of right and left auxiliary direction indication lamps are provided. These lamps constitute road irradiation lamps, whose irradiation areas are made large with reflection mirrors opened wide in the downward direction. The road surface irradiation lamps are operated in association with the direction indication lamps.

### 2. Description of the Related Art

In general, vehicles include various lamps having lighting functions for enabling a driver to easily recognize and see objects around the vehicle when driving at night and a signaling function for informing drivers of other vehicles or pedestrians about certain intention of driver in the vehicle.

For example, head lamps and fog lamps are used to provide a lighting function, and a turn signal lamp, a reversing lamp, a brake lamp and a side marker are used to provide a signaling function. The turn signal lamps are installed on front/rear and left/right sides of the vehicle and are turned on and off when the vehicle changes from one traveling lane to another or when the vehicle is turning at, e.g., an intersection to inform other vehicles or pedestrians of the driver's intended change in travel direction of the vehicle. Accordingly, the other vehicles or pedestrians can see that the turn signal is on and make preparations, thereby preventing a vehicle accident from occurring.

Some of the turn signal lamps corresponding to the changed direction are turned on and off according to the driver's operation, the driving state of the vehicle or the like, thereby informing other vehicles or pedestrians of the change in the traveling lane of the vehicle or the turning direction at an intersection or the like. However, when the other vehicle is traveling in a lateral position along or almost along side the vehicle that is turning or the other vehicle is traveling from the opposite direction of intended turning direction of a vehicle at an intersection, even though the turn signal lamp of the vehicle is turned on and off, it is difficult for the driver of the other vehicle to easily see the on/off of the turn signal lamp.

Accordingly, there is a demand for a system and method of enabling the drivers of other vehicles to easily detect a change in the traveling direction or a turning direction at an intersection even where it is difficult for the drivers of other vehicles to see whether the turn signal lamp is on or off.

The above information disclosed in this Background section is only for enhancement of understanding of the background of the invention and therefore it may contain information that does not form the prior art that is already known in this country to a person of ordinary skill in the art.

### SUMMARY OF THE DISCLOSURE

In view of the above, the present invention provides an automotive turn signal lamp which irradiates light of a road pattern indicating a traveling direction to be changed when a vehicle changes its traveling direction to allow the drivers of other vehicles to easily detect a change in the traveling direction of the vehicle even where it is difficult for the drivers of other vehicles to see the turn signal lamp, and a method for controlling the same.

The invention is defined by the independent claims. The dependent claims contain preferred developments of the invention.

According to an aspect of the present invention, there is provided an automotive turn signal lamp, comprising: a detection unit which detects a change in a traveling direction of a vehicle; and a turn signal lamp which irradiates light of a road pattern indicating the traveling direction to be changed.

According to another aspect of the present invention, there is provided a method for controlling an automotive turn signal lamp, comprising: detecting, by a detection unit, a change in a traveling direction of a vehicle; and irradiating light of a road pattern indicating the traveling direction to be changed.

### BRIEF DESCRIPTION OF THE DRAWINGS

The above and other aspects and features of the present invention will become more apparent by describing in detail exemplary embodiments thereof with reference to the attached drawings, in which:
FIG. 1 schematically shows an automotive turn signal lamp in accordance with an exemplary embodiment of the present invention;
FIG. 2 schematically shows a structure of the automotive turn signal lamp in accordance with the exemplary embodiment of the present invention;
FIG. 3 is a front view of a light source part of a second lamp unit in accordance with the exemplary embodiment of the present invention;
FIG. 4 is a side view of the light source part of the second lamp unit in accordance with the exemplary embodiment of the present invention;
FIG. 5 schematically shows a road pattern formed by the light source part of the second lamp unit in accordance with the exemplary embodiment of the present invention;
FIG. 6 schematically shows a road pattern formed by the turn signal lamp in accordance with the exemplary embodiment of the present invention;
FIG. 7 schematically shows a road pattern formed by a third lamp unit in accordance with the exemplary embodiment of the present invention;
FIG. 8 schematically shows a road pattern formed when a traveling direction is changed in accordance with the exemplary embodiment of the present invention;
FIG. 9 schematically shows a road pattern formed when turning at an intersection in accordance with the embodiment of the present invention;
FIG. 10 schematically shows a road pattern formed by the third lamp unit when turning at an intersection in accordance with the exemplary embodiment of the present invention; and
FIG. 11 is a flowchart showing a method of controlling an automotive turn signal lamp in accordance with the exemplary embodiment of the present invention.

### DETAILED DESCRIPTION OF THE DISCLOSURE

Advantages and features of the present invention and methods of accomplishing the same may be understood more readily by reference to the following detailed description of preferred embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Throughout the specification, like reference numerals in the drawings denote like elements.

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, combustion, plug-in hybrid electric vehicles, hydrogen-powered vehicles and other alternative fuel vehicles (e.g. fuels derived from resources other than petroleum).

In some embodiments, well-known steps, structures and techniques will not be described in detail to avoid obscuring the invention.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Embodiments of the invention are described herein with reference to plan and cross-section illustrations that are schematic illustrations of idealized embodiments of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing. In the drawings, respective components may be enlarged or reduced in size for convenience of explanation.

Hereinafter, an automotive turn signal lamp and a method for controlling the automotive turn signal lamp in accordance with embodiments of the present invention will be described with reference to the accompanying drawings.

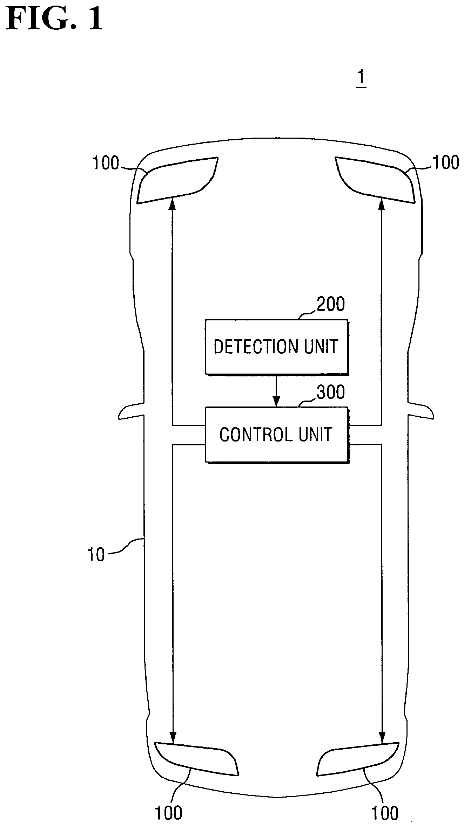

FIG. 1 schematically shows an automotive turn signal lamp in accordance with an embodiment of the present invention. As shown in FIG. 1, an automotive turn signal lamp system 1 in accordance with the embodiment of the present invention may include turn signal lamps 100 which are installed on front/rear and left/right sides of a vehicle 10, a detection unit 200 which detects a change in the traveling direction of the vehicle 10, and a control unit 300 which controls the turn signal lamps 100 according to the detection results of the detection unit 200 to irradiate light of a road pattern indicating the traveling direction to be changed.

A change from one traveling lane to another or turning at an intersection will be described as an example of the change in the traveling direction of the vehicle 10 in the embodiment of the present invention, but it is not limited thereto. That is, the present invention may include all cases where the traveling direction of the vehicle 10 is changed in various situations.

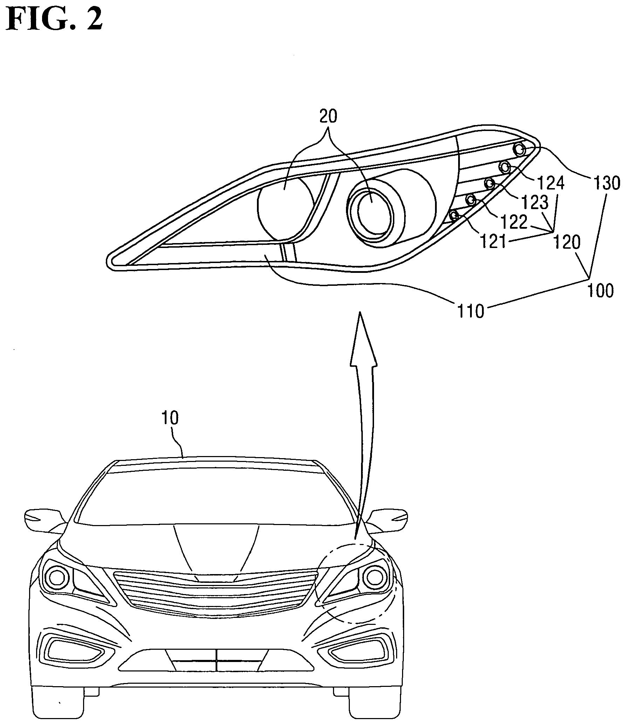

FIG. 2 schematically shows a structure of a turn signal lamp in accordance with the embodiment of the present invention, which is installed on one front side of the vehicle. As shown in FIG. 2, the turn signal lamp 100 in accordance with the embodiment of the present invention may be installed at one side of a head lamp 20 (e.g., high beam, low beam and the like) of the vehicle 10, and may include a first lamp unit 110, a second lamp unit 120 and a third lamp unit 130.

When the traveling direction of the vehicle 10 is changed, the first lamp unit 110 may be turned on and off to inform other vehicles or pedestrians of the change in the traveling direction of the vehicle 10. Also, the second lamp unit 120 may irradiate light in the direction of a road pattern, indicating the traveling direction to be changed, in one direction from the vehicle 10. The third lamp unit 130 may provide information on the circumferential state to other vehicles or pedestrians.

In the embodiment of the present invention, each of the turn signal lamps 100 installed on the front and left/right sides of the vehicle 10 includes the first lamp unit 110, the second lamp unit 120 and the third lamp unit 130, and each of the turn signal lamps 100 installed on the rear and left/right sides of the vehicle 10 includes only the first lamp unit 110. However, it is merely one example to facilitate understanding of the present invention, and the second lamp unit 120 and the third lamp unit 130 having the same functions may be also installed on the rear and left/right sides of the vehicle 10.

The second lamp unit 120 may include a plurality of light source parts 121 to 124 arranged in one direction on one side of the head lamp 20, and the third lamp unit 130 may include one light source part. However, it is merely one example to facilitate understanding of the present invention, and the number of the light source parts included in the second lamp unit 120 and the third lamp unit 130 may be changed according to the purpose and need.

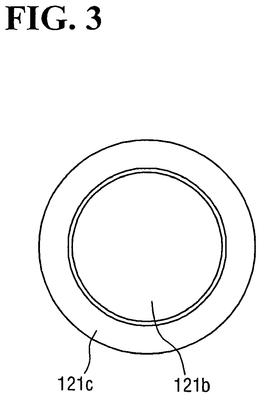

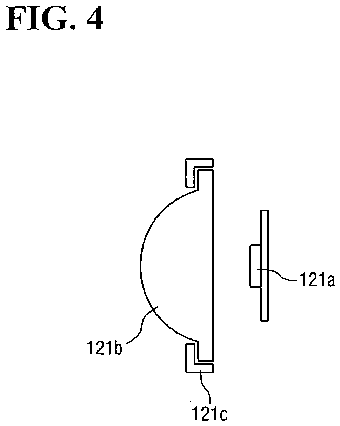

FIG. 3 is a front view of a light source part of the second lamp unit in accordance with the embodiment of the present invention. FIG. 4 is a side view of the light source part of the second lamp unit in accordance with the embodiment of the present invention. In this case, although only one light source part 121 among the light source parts 121 to 124 included in the second lamp unit 120 is illustrated in FIGS. 3 and 4, the other light source parts 122 to 124 may have the same structure as that of the light source part 121, and there may be a difference in the size, installation angle and the like without any deviation from the present invention.

As shown in FIGS. 3 and 4, the light source part 121 included in the second lamp unit 120 may include a light source 121a, a lens 121b, and a housing 121c in which the lens 121b is installed. For example, a light emitting diode is used as the light source 121a in the embodiment of the present invention. The light source 121a may be installed on a printed circuit board or the like, and a plurality of light sources may be included in one light source part. Further, a manufacturer name and the like may be represented on one surface of the housing 121c surrounding the lens 121b.

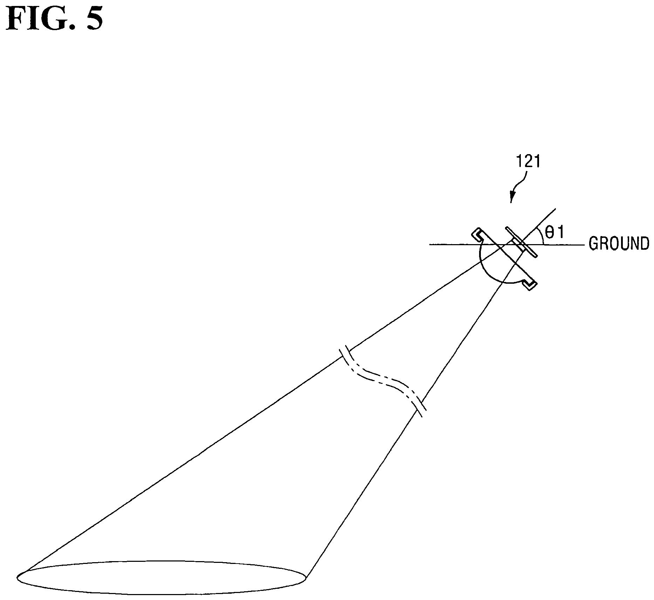

FIG. 5 schematically shows a road pattern formed by the light source part of FIG. 4. In FIG. 5, the light source part 121 may be installed to be inclined by a predetermined angle θ1 downward from the ground so that a desired shape can be formed on the road when light is irradiated. The shape formed on the road may be changed according to the size, installation angle or the like of the light source part 121. In this case, although the light source part 121 is inclined by the predetermined angle θ1 downward from the ground in the embodiment of the present invention, it is not limited thereto. For example, the light source part may be installed to be inclined by a predetermined angle from a central line of the vehicle instead of from the ground.

Further, the shape formed on the road by the light source part 121 of FIG. 4 is a circular shape in the example of FIG. 5. However, it is merely one example to facilitate understanding of the present invention, and it is not limited thereto. The shape formed on the road by the light source part may have various shapes, and the color of the shape may be also changed.

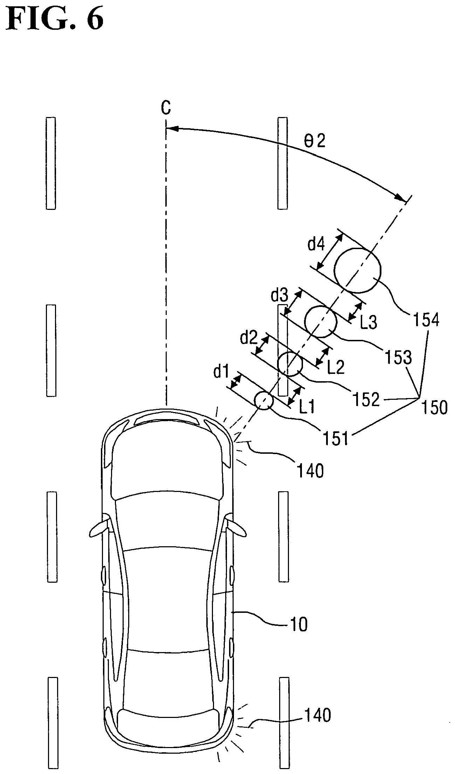

FIG. 6 schematically shows a road pattern formed by the turn signal lamp in accordance with the embodiment of the present invention. As shown in FIG. 6, the turn signal lamp 100 in accordance with the embodiment of the present invention may provide a blinking pattern 140 formed by the first lamp unit 110 and a road pattern 150 formed by the second lamp unit 120 to indicating the intended traveling direction of the vehicle 10.

When the light source parts 121 to 124 of the second lamp unit 120 are different sizes and installed at angles, it is possible to form the road pattern 150 in which circular shapes are arranged in one direction as illustrated in FIG. 6 on the road itself. Sizes dl, d2, d3 and d4 or distances L1, L2 and L3 of shapes 151 to 154 included in the road pattern 150 may be achieved by adjusting the sizes and installation angles of the light source parts 121 to 124 included in the second lamp unit 120. The shapes 151 to 154 included in the road pattern 150 of FIG. 6 may have different sizes. The different sizes of the shapes 151 to 154 may be achieved by using the light source parts 121 to 124 having different sizes, or setting different focal lengths from the light source parts 121 to 124.

Further, all of the shapes 151 to 154 included in the road pattern 150 have circular shapes in the example of FIG. 6. However, it is merely one example to facilitate understanding of the present invention, and it is not limited thereto. The shapes formed by the light source parts 121 to 124 of the second lamp unit 120 may be different from each other.

Meanwhile, it can be seen from FIG. 6 that the road pattern 150 is formed to have a predetermined angle θ2 from a central line C of the vehicle 10. The angle θ2 between the central line C of the vehicle 10 and the road pattern 150 may be set through various tests such that the road pattern can be easily detected from several directions. The angle θ2 may be set through pre-tests by a manufacturer, or may be a certain angle set by the driver.

Further, the shapes 151 to 154 included in the road pattern 150 have sizes gradually increasing as they go away from the vehicle 10 in the embodiment of the present invention. This allows the road pattern 150 to have directionality such that other vehicles or pedestrians can more easily recognize the intended traveling direction. Although the shapes 151 to 154 have sizes gradually increasing as they go away from the vehicle 10 in the embodiment of the present invention, it is not limited thereto. The shapes 151 to 154 may have sizes gradually decreasing or the same size.

Meanwhile, in the embodiment of the present invention, the turn signal lamp 100 may include the third lamp unit 130 in addition to the first lamp unit 110 and the second lamp unit 120. The third lamp unit 130 may form a road pattern having a character, a shape, a color and the like to inform other vehicles of certain information around the circumferential state, e.g., when there is another vehicle or pedestrian or a vehicle accident occurs at a location invisible to other vehicles, as described above. The character, shape, color and the like may be achieved by a lens, light source and the like included in the third lamp unit 130.

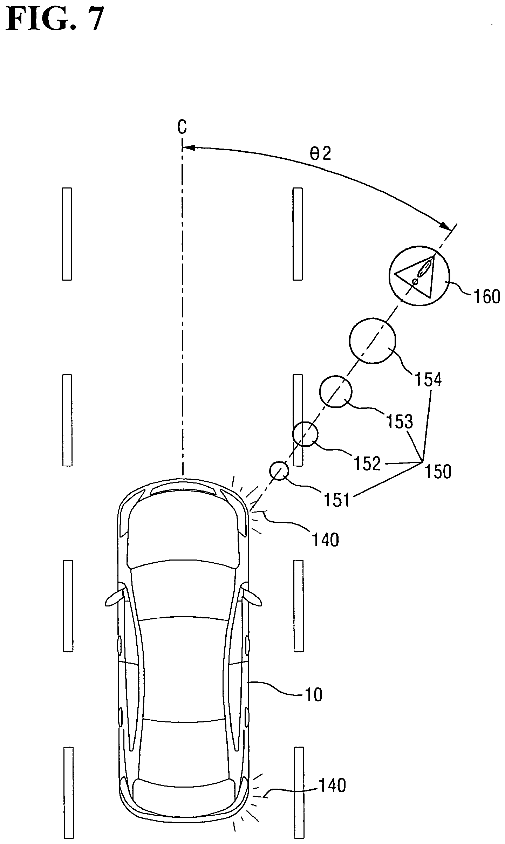

For example, as shown in FIG. 7, when the traveling direction of the vehicle 10 is changed, while the blinking pattern 140 is formed by the first lamp unit 110 and the road pattern 150 is formed by the second lamp unit 120, a road pattern 160 may be additionally formed by the third lamp unit 130. Accordingly, the drivers of other vehicles may be informed that there is a dangerous condition at a location invisible to them and make preparations in light of the road pattern 160 formed by the third lamp unit 130.

Further, the vehicle 10 may include a device allowing the driver to select a character, a shape, a color and the like of the road pattern 160 such that various road patterns may be formed according to the circumferential state.

The case where the third lamp unit 130 is operated when the traveling direction of the vehicle 10 is changed has been described in the embodiment of the present invention. However, it is merely one example to facilitate understanding of the present invention. The third lamp unit 130 may be operated independently of the first lamp unit 110 and the second lamp unit 120 when it is necessary to inform other vehicles or pedestrians of the information on the circumferential state. Further, the third lamp unit 130 may be omitted if there is a separate lamp capable of indicating the circumferential state.

The detection unit 200 may detect the change in the traveling direction of the vehicle. Specifically, the detection unit 200 may detect the change in the traveling direction of the vehicle according to the operation of the driver or the driving state of the vehicle. For example, the detection unit 200 may detect the change in the traveling direction of the vehicle 10 when the driver operates an operation lever for operating the turn signal lamp 100 installed on one side of a steering wheel provided in the vehicle 10, or when a lane detection unit detects vehicle 10 is departing into another lane. However, it is merely one example to facilitate understanding of the present invention, and it is not limited thereto.

Further, the detection unit 200 may detect that the traveling direction is changed to a direction having a higher priority according to the predetermined priority order when the direction according to the driver's operation of the operation lever is different from the direction according to the detection of lanes. For example, when the direction according to the driver's operation of the operation lever is a left direction while the direction according to the detection of lanes is in a right direction (or vice versa), the detection unit may change the operation of turning signal to the right or left to correct for a driver's mistake according to the predetermined priority order. That is, since the vehicle 10 is actually moving in the opposite direction indicated by the driver the detection unit determines that the driver's input was incorrect and corrects for this mistake to avoid a possible accident.

As mentioned above, the detection unit 200 may include logic for detecting a lane change. In particular, a camera module may be configured to detect the change in the traveling direction through a lane detection technique. When the vehicle 10 begins to crossover a lane line in an image obtained by the camera module, the detection unit detects that the vehicle 10 is changing lanes in a corresponding direction.

The control unit 300 may determine the traveling direction to be changed according to the detection results of the detection unit 200, determine a lamp unit or light source part to be operated according to the determination results, and control the supply of current to turn the lamp unit or light source part on/off.

For example, when the vehicle 10 is turning right at an intersection, the control unit 300 may control such that the blinking pattern 140 can be formed by supplying the current to the first lamp units 110 installed on the front/rear and right sides of the vehicle, and the road pattern 150 can be formed and turned on and off in the same way as the first lamp units 110 by supplying the current to the second lamp unit 120. Further, if it is necessary to turn on the third lamp unit 130, the control unit 300 may be controlled so that the road pattern 160 has a character, shape and color and the like corresponding to the circumferential state can be formed by supplying the current to the third lamp unit 130.

The control unit 300 may be controlled so that the second lamp unit 120 can be turned on and off in the same way as the first lamp unit 110, and the light source parts 121 to 124 included in the second lamp unit 120 can be simultaneously or sequentially turned on and off.

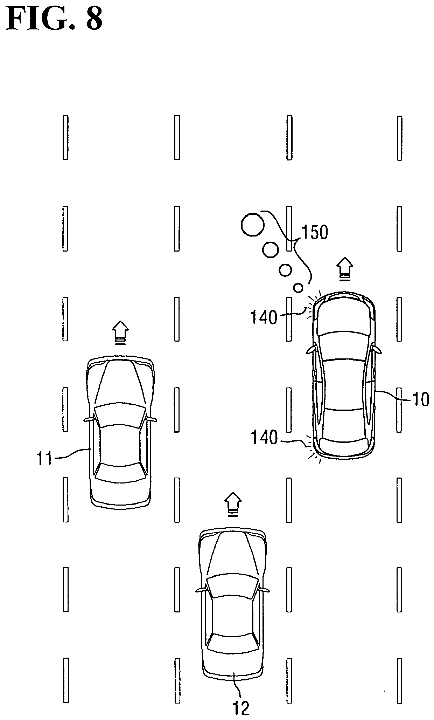

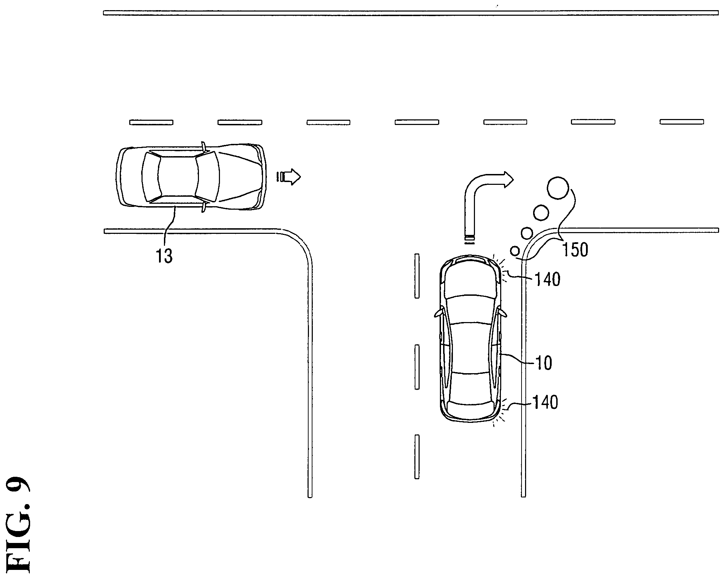

FIGS. 8 and 9 schematically show road patterns in accordance with the embodiment of the present invention. FIG. 8 illustrates an example in which the turn signal lamp 100 is operated in order to indicate the change in the traveling lane of the vehicle 10. When the vehicle 10 intends to change its traveling lane, if only the blinking pattern 140 is formed by the first lamp units 110, although a vehicle 12 located behind the vehicle 10 can detect the blinking pattern 140, it is difficult for a vehicle 11 traveling beside the vehicle 10 in a lateral position almost similar to the vehicle 10 to see the on/off of the first lamp units 110.

In this case, in the present invention, since light of the road pattern 150 indicating the change in the traveling direction is irradiated by the second lamp unit 120, the vehicle 11 traveling in a lateral position almost similar to the vehicle 10 also can easily detect the change in the traveling direction of the vehicle 10. Accordingly, it is possible to prevent a vehicle accident from occurring when two vehicles change lanes at the same time, or the driver of the vehicle 11 beside the vehicle 10 does not see that the vehicle next to them is intending to change lanes.

FIG. 9 illustrates a case where the vehicle 10 intends to turn right at an intersection, wherein it is difficult for a vehicle 13 traveling from the opposite direction to the intended turning direction to see the turn signal lamp. In this case, in the embodiment of the present invention, since light of the road pattern 150 indicating the change in the traveling direction is irradiated by the second lamp unit 120 at a predetermined angle θ2 from the central line of the vehicle 10, the vehicle 13 traveling from the opposite direction can also see the change in the traveling direction of the vehicle 10, thereby preventing a vehicle accident.

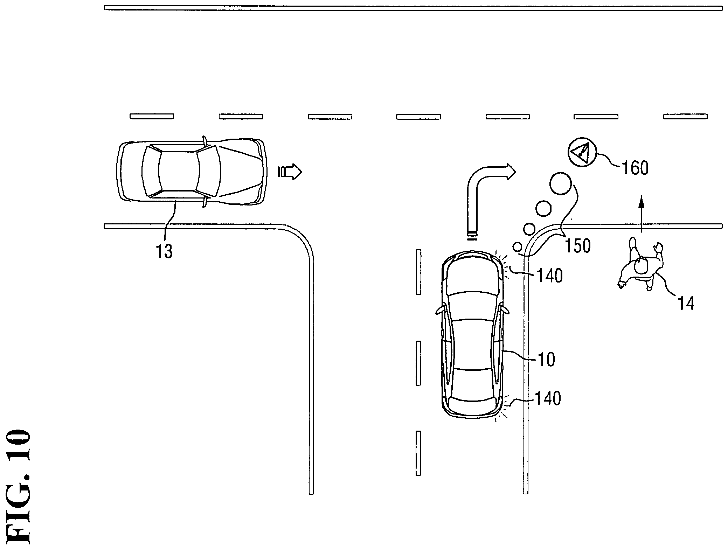

FIG. 10 illustrates a case where the vehicle 10 intends to turn right at an intersection as illustrated in FIG. 9, and a pedestrian 14 is walking toward a portion of the road on the right side of the vehicle 10. In this case, to the vehicle 10 is able to inform the vehicle 13 traveling from the opposite direction that a pedestrian is approaching by, in addition to the blinking pattern 140 formed by the first lamp units 110 and the road pattern 150 formed by the second lamp unit 120, lighting or forming the road pattern 160 which is formed by the third lamp unit 130.

Accordingly, in the case of FIG. 10, the vehicle 13 traveling from the opposite direction to the turning direction can see that there is a dangerous factor on the right side of the vehicle 10 (i.e., the pedestrian), thereby preventing the pedestrian 14 from being injured.

The above example for providing a pedestrian approaching warning has been illustrated in FIG. 10. However, it is merely one example to facilitate understanding of the present invention, and it is not limited thereto. It is possible to provide the information on the circumferential state in various situations such as emergence of an unexpected vehicle and occurrence of a vehicle accident.

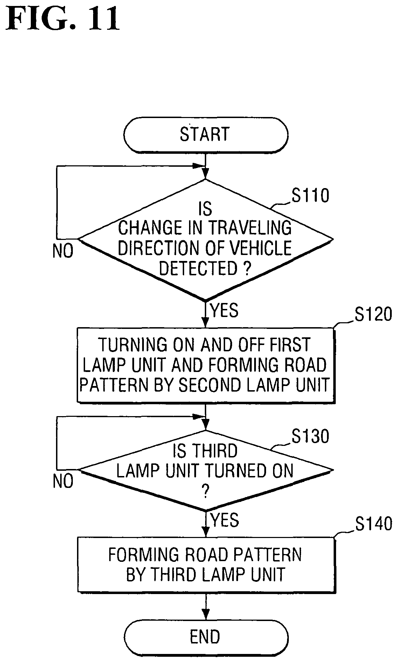

FIG. 11 is a flowchart showing a method of controlling an automotive turn signal lamp in accordance with the embodiment of the present invention. As shown in FIG. 11, in the method of controlling an automotive turn signal lamp in accordance with the embodiment of the present invention, first, the detection unit 200 detects the change in the traveling direction such as a change from one lane to another or making a turn at an intersection (step S110). The change in the traveling direction may be achieved by the driver's operation of the operation lever of the turn signal lamps 100, a lane change detection technique or the like, as described above.

If it is detected that the traveling direction of the vehicle is changing, the control unit 300 operates the first lamp unit 110 and the second lamp unit 120 by supplying the current to the first lamp unit 110 and the second lamp unit 120 corresponding to the changed direction (step S120). That is, if the current is supplied by the control unit 300, the first lamp unit 110 forms the blinking pattern 140 to allow a vehicle located behind or beside the vehicle 10 to recognize the change in the traveling direction of the vehicle 10, and the second lamp unit 120 irradiates light of the road pattern 150 indicating the change in the traveling direction to allow a vehicle traveling from the opposite direction to the traveling direction to recognize and see the change in the traveling direction of the vehicle 10.

In this case, a case where the first lamp unit 110 and the second lamp unit 120 are operated at the same time when the traveling direction of the vehicle 10 is changed has been described at step S120. However, it is merely one example to facilitate understanding of the present invention, and it is not limited thereto.

Meanwhile, if it is requested by the driver or the like to provide the information on the circumferential state (e.g., various situations or factors occurring around the vehicle) to other vehicles (step S130), the control unit 300 supplies the current to the third lamp unit 130 in addition to the first lamp unit 110 and the second lamp unit 120 to irradiate light of the road pattern 160 indicating the circumferential state (step S140).

Meanwhile, at step S140, whether to operate the third lamp unit 130 may be determined by selection of the driver or the like. If a separate device is provided, the third lamp unit 130 may be omitted. Further, although a case where the third lamp unit 130 is operated after operating the first lamp unit 110 and the second lamp unit 120 has been described as an example in FIG. 11, it is merely one example to facilitate understanding of the present invention. The operation order may be changed and only one lamp unit may be independently operated in some cases. For example, the first lamp unit 110 and the second lamp unit 120 are operated at the same time when the traveling direction is changed in the case of FIG.11, but it is not limited thereto. Only one lamp unit may be selectively operated, and the third lamp unit 130 may be operated independently of the first lamp unit 110 and the second lamp unit 120.

In the automotive turn signal lamp and the method for controlling the automotive turn signal lamp in accordance with the present invention, at least one of the following effects can be obtained.

In a case where the vehicle changes its traveling direction, by irradiating light of a road pattern indicating the changing traveling direction, the change can be easily seen by vehicles and pedestrians that would have in the past had difficulty detecting that the turn signal has been activated. Further, by irradiating light of a road pattern indicating a situation occurring at a location invisible to drivers of other vehicles in addition to the road pattern indicating the traveling direction to be changed, it is possible to inform other vehicles of the situation, thereby preventing occurrence of a vehicle accident.

Although the above exemplary embodiment is described as using a plurality of units to perform the above process, it is understood that the above processes may also be performed by a single controller or unit. Furthermore, the control logic of the present invention may be embodied as computer readable media on a computer readable medium containing executable program instructions executed by a processor, controller or the like. Examples of the computer readable mediums include, but are not limited to, ROM, RAM, compact disc (CD)-ROMs, magnetic tapes, floppy disks, flash drives, smart cards and optical data storage devices. The computer readable recording medium can also be distributed in network coupled computer systems so that the computer readable media is stored and executed in a distributed fashion, e.g., by a telematics server.

The effects of the present invention are not limited thereto, and other effects of the present invention can be apparently understood from the description of claims.

While the present invention has been particularly shown and described with reference to exemplary embodiments thereof, it will be understood by those of ordinary skill in the art that various changes in form and detail may be made therein without departing from scope of the present invention as defined by the following claims. The exemplary embodiments should be considered in a descriptive sense only and not for purposes of limitation.

## Claims

1. A vehicle with a turn signal lamp system, comprising:
a detection unit (200) configured to detect a change in a traveling direction of the vehicle; and
a turn signal lamp (100) which is installed in a head lamp housing of the vehicle, a rear lamp housing of the vehicle, or both and comprises a first lamp unit (110) configured to irradiate light forming a blinking pattern and a second lamp unit (120) configured to irradiate light forming a road pattern (150) to indicate the change in the traveling direction,
wherein the second lamp unit (120) includes a plurality of light source parts (121, 122, 123, 124) having a linear arrangement disposed adjacent to an exterior edge of the head lamp housing and configured to irradiate light forming a road pattern (150) at a predetermined angle (θ2) from a central line of the vehicle.

2. The vehicle with the turn signal lamp system of claim 1, wherein the change in the traveling direction includes at least one of a change in a traveling lane of the vehicle and turning at an intersection.

3. The vehicle with the turn signal lamp system of claim 1, wherein the turn signal lamp (100) further comprises a third lamp unit (130) configured to irradiate light forming another road pattern (160) to indicate a predetermined set of information around the vehicle to other vehicles or pedestrians near the vehicle.

4. The vehicle with the turn signal lamp system of claim 1, wherein the road pattern (150) includes specific shapes arranged in one direction from the vehicle, or wherein the road pattern (150) is formed outwardly from a longitudinal center axis of the vehicle to have a predetermined acute angle from the longitudinal center axis.

5. The vehicle with the turn signal lamp system of claim 4, wherein the shapes have sizes gradually increasing or decreasing as they go away from the vehicle.

6. The vehicle with the turn signal lamp system of claim 4, wherein the second lamp unit (120) includes a plurality of light source parts configured to form the shapes included in the road pattern (150) respectively, and the light source parts have different sizes and installation angles according to sizes and positions of the shapes.

7. The vehicle with the turn signal lamp system of claim 6, wherein the light source parts are configured to be simultaneously or sequentially turned on and off.

8. A method for controlling a vehicle with a turn signal lamp system, comprising the steps of:
detecting, by a detection unit (200), a change in a traveling direction of the vehicle; and
controlling, by a control unit (300), a first lamp unit (110) of a turn signal lamp (100) to irradiate light forming a blinking pattern and a second lamp unit (120) of the turn signal lamp (100) to irradiate light forming a road pattern (150) to indicate the change in the traveling direction,
wherein the turn signal lamp (100) is installed in a head lamp housing of the vehicle, a rear lamp housing of the vehicle, or both,
wherein the second lamp unit (120) includes a plurality of light source parts (121, 122, 123, 124) having a linear arrangement disposed adjacent to an exterior edge of the head lamp housing and irradiating light forming a road pattern (150) at a predetermined angle (θ2) from a central line of the vehicle, and
wherein the step of controlling comprises controlling a third lamp unit (130) of the turn signal lamp (100) to irradiate light forming another road pattern (160) to indicate a predetermined set of information around the vehicle to other vehicles or pedestrians near the vehicle.

9. The method of claim 8, wherein the step of detecting comprises detecting at least one of a change in a traveling lane of the vehicle and turning at an intersection, or wherein the step of controlling comprises turning on and off a lamp corresponding to the traveling direction to be changed.

10. The method of claim 8, wherein the road pattern includes specific shapes arranged in one direction from the vehicle.

11. The method of claim 10, wherein the step of controlling comprises forming the road pattern (150) such that the shapes have sizes gradually increasing or decreasing as they go away from the vehicle, or wherein the step of controlling comprises simultaneously or sequentially turning on and off the second lamp unit (120) illuminating the shapes included in the road pattern (150).

12. The method of claim 9, wherein the step of controlling comprises forming the road pattern (150) outwardly from a longitudinal center axis of the vehicle to have a predetermined acute angle from the longitudinal center axis.

13. A non-transitory computer readable storage medium containing program instruction executed by a control unit, the computer readable medium comprising:
program instructions to implement the method of any of claims 8 to 12.

## Patentansprüche

1. Fahrzeug mit einem Fahrtrichtungsanzeigeleuchtensystem, umfassend:
- eine Erfassungseinheit (200), die eingerichtet ist, um eine Änderung in eine Fahrtrichtung des Fahrzeugs zu erfassen; und
- eine Fahrtrichtungsanzeigeleuchte (100), die in einem Scheinwerfergehäuse des Fahrzeugs, einem Heckleuchtengehäuse des Fahrzeugs oder in beiden eingebaut ist, und eine erste Leuchteneinheit (110), die eingerichtet ist, um Licht, das ein Blinkmuster bildet, auszustrahlen, und eine zweite Leuchteneinheit (120) aufweist, die eingerichtet ist, um Licht, das ein Straßenmuster (150) bildet, auszustrahlen, um die Änderung in die Fahrtrichtung anzuzeigen,
- wobei die zweite Leuchteneinheit (120) eine Mehrzahl von Lichtquellenbereichen (121, 122, 123, 124) umfasst, die eine lineare Anordnung aufweisen, die benachbart zu einer Außenkante des Scheinwerfergehäuses angeordnet ist, und eingerichtet ist, um Licht, das ein Straßenmuster (150) bildet, in einem vorbestimmten Winkel (θ2) von einer Mittellinie des Fahrzeugs auszustrahlen.

2. Fahrzeug mit dem Fahrtrichtungsanzeigeleuchtensystem nach Anspruch 1, wobei die Änderung in die Fahrtrichtung mindestens eine Änderung in einer Fahrspur des Fahrzeugs oder ein Abbiegen an einer Kreuzung umfasst.

3. Fahrzeug mit dem Fahrtrichtungsanzeigeleuchtensystem nach Anspruch 1, wobei die Fahrtrichtungsanzeigeleuchte (100) ferner eine dritte Leuchteneinheit (130) umfasst, die eingerichtet ist, um Licht, das ein anderes Straßenmuster (160) bildet, auszustrahlen, um einen vorbestimmten Satz von Informationen um das Fahrzeug zu anderen Fahrzeugen oder Fußgängern in der Nähe des Fahrzeugs anzuzeigen.

4. Fahrzeug mit dem Fahrtrichtungsanzeigeleuchtensystem nach Anspruch 1, wobei das Straßenmuster (150) spezifische Formen umfasst, die in eine Richtung vom Fahrzeug angeordnet sind, oder wobei das Straßenmuster (150) von einer Längsmittelachse des Fahrzeugs nach außen ausgebildet ist, um einen vorbestimmten spitzen Winkel von der Längsmittelachse aufzuweisen.

5. Fahrzeug mit dem Fahrtrichtungsanzeigeleuchtensystem nach Anspruch 4, wobei die Formen Größen aufweisen, die graduell zunehmen oder abnehmen, wenn sie sich vom Fahrzeug entfernen.

6. Fahrzeug mit dem Fahrtrichtungsanzeigeleuchtensystem nach Anspruch 4, wobei die zweite Leuchteneinheit (120) ein Mehrzahl von Lichtquellenbereiche umfasst, die eingerichtet sind, um die Formen zu bilden, die jeweils im Straßenmuster (150) enthalten sind, und die Lichtquellenbereiche verschiedene Größen und Einbauwinkel gemäß den Größen und Positionen der Formen aufweisen.

7. Fahrzeug mit dem Fahrtrichtungsanzeigeleuchtensystem nach Anspruch 6, wobei die Lichtquellenbereiche gleichzeitig oder nacheinander ein- und ausgeschaltet werden.

8. Verfahren zur Steuerung eines Fahrzeugs mit einem Fahrtrichtungsanzeigeleuchtensystem, das die Schritte aufweist:
- Erfassen einer Änderung in eine Fahrtrichtung des Fahrzeugs durch eine Erfassungseinheit (200); und
- Steuern, durch eine Steuereinheit (300), einer ersten Leuchteneinheit (110) einer Fahrtrichtungsanzeigeleuchte (100), um Licht, das ein Blinkmuster bildet, auszustrahlen, und einer zweiten Leuchteneinheit (120), um Licht, das ein Straßenmuster (150) bildet, auszustrahlen, um die Änderung in die Fahrtrichtung anzuzeigen,
- wobei die Fahrtrichtungsanzeigeleuchte (100) in einem Scheinwerfergehäuse des Fahrzeugs, einem Heckleuchtengehäuse des Fahrzeugs oder in beiden eingebaut ist,
- wobei die zweite Leuchteneinheit (120) eine Mehrzahl von Lichtquellenbereichen (121, 122, 123, 124) umfasst, die eine lineare Anordnung aufweisen, die benachbart zu einer Außenkante des Scheinwerfergehäuses angeordnet ist, und Licht, das ein Straßenmuster (150) bildet, in einem vorbestimmten Winkel (θ2) von einer Mittellinie des Fahrzeugs ausstrahlt, und
- wobei der Schritt des Steuerns ein Steuern einer dritten Leuchteneinheit (130) der Fahrtrichtungsanzeigeleuchte (100) zum Ausstrahlen von Licht aufweist, das ein anderes Straßenmuster (160) bildet, um einen vorbestimmten Satz von Informationen um das Fahrzeug zu anderen Fahrzeugen oder Fußgängern in der Nähe des Fahrzeugs anzuzeigen.

9. Verfahren nach Anspruch 8, wobei der Schritt des Erfassens ein Erfassen von mindestens einer Änderung einer Fahrspur des Fahrzeugs oder ein Abbiegen an einer Kreuzung aufweist, oder wobei der Schritt des Steuerns ein Ein- und Ausschalten einer Leuchte entsprechend der zu ändernden Fahrtrichtung aufweist.

10. Verfahren nach Anspruch 8, wobei das Straßenmuster spezifische Formen umfasst, die in eine Richtung vom Fahrzeug angeordnet sind.

11. Verfahren nach Anspruch 10, wobei der Schritt des Steuerns ein Ausbilden des Straßenmusters (150) aufweist, so dass die Formen Größen aufweisen, die graduell zunehmen oder abnehmen, wenn sie sich vom Fahrzeug entfernen, oder wobei der Schritt des Steuerns ein gleichzeitiges oder sequentielles Ein- und Ausschalten der zweiten Leuchteneinheit (120) aufweist, die die im Straßenmuster (150) enthaltenen Formen beleuchtet.

12. Verfahren nach Anspruch 9, wobei der Schritt des Steuerns ein Ausbilden des Straßenmusters (150) von einer Längsmittelachse des Fahrzeugs nach außen aufweist, um einen vorbestimmten spitzen Winkel von der Längsmittelachse aufzuweisen.

13. Nicht-transitorisches computerlesbares Speichermedium, das eine Programmanweisung enthält, die von einer Steuereinheit ausgeführt wird, wobei das computerlesbare Medium aufweist:
- Programmanweisungen, um das Verfahren nach einem der Ansprüche 8 bis 12 zu implementieren.

## Revendications

1. Véhicule avec un système de clignotant comprenant :
une unité de détection (200) configurée pour détecter un changement d'une direction de déplacement du véhicule ; et
un clignotant (100) qui est installé dans un boîtier de phare du véhicule, un boîtier de feu arrière du véhicule, ou les deux et comprend une première unité de lampe (110) configurée pour émettre une lumière formant un motif de clignotement et une deuxième unité de lampe (120) configurée pour émettre une lumière formant un modèle routier (150) pour indiquer le changement de la direction de déplacement,
dans lequel la deuxième unité de lampe (120) comprend une pluralité de parties de source de lumière (121, 122, 123, 124) ayant un agencement linéaire disposé de manière adjacente à un bord extérieur du boîtier de phare et configuré pour émettre une lumière formant un modèle routier (150) selon un angle prédéterminé (θ2) par rapport à une ligne centrale du véhicule.

2. Véhicule ayant le système de clignotant de la revendication 1, dans lequel le changement de la direction de déplacement comporte au moins l'un d'un changement de la voie de déplacement du véhicule et d'un virage à une intersection.

3. Véhicule ayant le système de clignotant de la revendication 1, dans lequel le clignotant (100) comprend en outre une troisième unité de lampe (130) configurée pour émettre une lumière formant un autre modèle routier (160) pour indiquer un ensemble prédéterminé d'informations autour du véhicule à d'autres véhicules ou à des piétons à proximité du véhicule.

4. Véhicule ayant le système de clignotant de la revendication 1, dans lequel le modèle routier (150) comporte des formes spécifiques agencées dans une direction par rapport au véhicule, ou dans lequel le modèle routier (150) est formé vers l'extérieur à partir d'un axe central longitudinal du véhicule pour avoir un angle aigu prédéterminé par rapport à l'axe central longitudinal.

5. Véhicule ayant le système de clignotant de la revendication 4, dans lequel les formes ont des dimensions augmentant ou diminuant progressivement à mesure qu'elles s'éloignent du véhicule.

6. Véhicule ayant le système de clignotant de la revendication 4, dans lequel la deuxième unité de lampe (120) comporte une pluralité de parties de source de lumière configurées pour former respectivement les formes incluses dans le modèle routier (150), et les parties de source de lumière ont différentes dimensions et différents angles d'installation en fonction des dimensions et des positions des formes.

7. Véhicule ayant le système de clignotant de la revendication 6, dans lequel les parties de source de lumière sont configurées pour être activées et désactivées simultanément ou séquentiellement.

8. Procédé de commande d'un véhicule ayant un système de clignotant, comprenant les étapes:
détecter, par une unité de détection (200), un changement d'une direction de déplacement du véhicule ; et
commander, par une unité de commande (300), une première unité de lampe (110) d'un clignotant (100) pour émettre une lumière formant un motif de clignotement et une deuxième unité de lampe (120) du clignotant (100) pour émettre une lumière formant un modèle routier (150) pour indiquer le changement de la direction de déplacement,
dans lequel le clignotant (100) est installé dans un boîtier de phare du véhicule, un boîtier de feu arrière du véhicule, ou les deux,
dans lequel la deuxième unité de lampe (120) comporte une pluralité de parties de source de lumière (121, 122, 123, 124) ayant un agencement linéaire disposé de manière adjacente à un bord extérieur du boîtier de phare et émettant une lumière formant un modèle routier (150) selon un angle prédéterminé (θ2) par rapport à une ligne centrale du véhicule, et
dans lequel l'étape de commande comprend le fait de commander une troisième unité de lampe (130) du clignotant (100) pour émettre une lumière formant un autre modèle routier (160) pour indiquer un ensemble prédéterminé d'informations autour du véhicule à d'autres véhicules ou à des piétons à proximité du véhicule .

9. Procédé de la revendication 8, dans lequel l'étape de détection comprend le fait de détecter au moins l'un d'un changement d'une voie de déplacement du véhicule et d'un virage à une intersection, ou dans lequel l'étape de commande comprend le fait d'activer et de désactiver une lampe correspondant à la direction de déplacement à changer.

10. Procédé de la revendication 8, dans lequel le modèle routier comporte des formes spécifiques agencées dans une direction par rapport au véhicule.

11. Procédé de la revendication 10, dans lequel l'étape de commande comprend le fait de former le modèle routier (150) de sorte que les formes ont des dimensions augmentant ou diminuant progressivement à mesure qu'elles s'éloignent du véhicule, ou dans lequel l'étape de commande comprend le fait d'activer et de désactiver simultanément ou séquentiellement la deuxième unité de lampe (120) éclairant les formes incluses dans le modèle routier (150).

12. Procédé de la revendication 9, dans lequel l'étape de commande comprend le fait de former le modèle routier (150) vers l'extérieur à partir d'un axe central longitudinal du véhicule pour avoir un angle aigu prédéterminé par rapport à l'axe central longitudinal.

13. Support de stockage non transitoire lisible par ordinateur contenant une instruction de programme exécutée par une unité de commande, le support lisible par ordinateur comprenant :
des instructions de programme pour mettre en oeuvre le procédé de l'une des revendications 8 à 12.
